## Europäisches Patentamt

## European Patent Office

## Office européen des brevets

(19)

(11) Veröffentlichungsnummer: **0 092 805**

**B1**

(12)

# EUROPÄISCHE PATENTSCHRIFT

(45) Veröffentlichungstag der Patentschrift:
**15.10.86**

(51) Int. Cl.⁴: **A 01 D 41/02**

(21) Anmeldenummer: **83103903.7**

(22) Anmeldetag: **21.04.83**

(54) **Mähdrescher.**

(30) Priorität: **23.04.82 US 371046**

(43) Veröffentlichungstag der Anmeldung:
**02.11.83 Patentblatt 83/44**

(45) Bekanntmachung des Hinweises auf die Patenterteilung:
**15.10.86 Patentblatt 86/42**

(84) Benannte Vertragsstaaten:
**BE DE FR GB IT**

(56) Entgegenhaltungen:
**DE-A-2 317 048**
**DE-A-2 433 948**
**DE-A-2 727 549**
**DE-A-3 125 659**

(73) Patentinhaber: **DEERE & COMPANY, 1 John Deere Road, Moline Illinois 61265 (US)**

(72) Erfinder: **Hagstrom, Gerald Fredrick, 4605 - 8th Ave, Moline Illinois 61265 (US)**
Erfinder: **Leemans, Daniel Louis, 2806 - 18th St. Ct., Moline Illinois 61265 (US)**
Erfinder: **Turner, Reed James, 3106 - 186 St. N., East Moline Illinois 61244 (US)**

(74) Vertreter: **Sartorius, Peter, DEERE & COMPANY European Office, Patent Department Postfach 503 Steubenstrasse 36- 42, D-6800 Mannheim 1 (DE)**

LIBER, STOCKHOLM 1986

EP 0 092 805 B1

### Beschreibung

Die Erfindung bezieht sich auf einen Mähdrescher mit einer nach dem Axialflußprinzip arbeitenden quer zur Bewegungsrichtung des Mähdreschers sich erstreckenden Dresch- und Trennvorrichtung, die in einer Erntebergungsvorrichtung hinter einer das Erntegut zusammenführenden Einzugsschnecke vorgesehen ist und Erntegut über eine unterhalb der aus einer Dresch- und Trenntrommel und einem Dresch- und Trenntrommelgehäuse gebildeten Dresch- und Trennvorrichtung vorgesehene, gegenläufige Schneckenwendeln aufweisende Förderschnecke einem nachgeschalteten in einem Schrägfördergehäuse angeordneten Elevatorförderer zuführt, wobei das Dresch- und Trenngehäuse zumindest teilweise aus einem Durchlaßöffnungen aufweisenden Dresch- und Trennkorb besteht und das Dresch- und Trenntrommelgehäuse im Bereich von Kupplungselementen zur Verbindung der Erntebergungsvorrichtung mit dem Schrägfördergehäuse vorgesehen ist.

Es ist ein Mähdrescher bekannt (EP-A-0 042 824), der mit einer Erntebergungsvorrichtung ausgerüstet ist, in der eine Dresch- und Trennvorrichtung in einem Trenntrommelgehäuse angeordnet ist, die nach dem Axialflußprinzip arbeitet. Die Erntebergungsvorrichtung, die Dresch- und Trennvorrichtung sowie das anschließende Schrägfördergehäuse können voneinander getrennt werden. Zwischen der Einzugsschnecke und der Dresch- und Trennvorrichtung befindet sich jedoch ein zusätzliches Förderorgan im Bereich der Einlaßöffnung vor der Dresch- und Trennvorrichtung. Hierdurch soll zwar eine bessere Beschickung der Dresch- und Trennvorrichtung gewährleistet werden, jedoch gleichzeitig wird durch diese Maßnahme der Förderweg zwischen der Einzugsschnecke und der Dresch- und Trennvorrichtung vergrößert und somit auch die Baulänge der Gesamtvorrichtung sowie der sich daran anschließenden Dresch- und Trennvorrichtung.

Demgegenüber liegt der Erfindung die Aufgabe zugrunde, die Erntebergungsvorrichtung für einen Mähdrescher mit einer Dresch- und Trennvorrichtung derart kompakt auszubilden und anzuordnen, daß neben einem einwandfreien Ausdrusch und einem ungehinderten Transport des Erntegutes mittels der einzelnen Förderorgane ein leichter Zugang zu den einzelnen Arbeitsorganen möglich ist. Diese Aufgabe ist dadurch gelöst worden, daß die Dresch- und Trennvorrichtung zwischen der Einzugsschnecke und dem Elevatorförderer vorgesehen und die Einzugsschnecke zur Beschickung der Dresch- und Trenntrommel unmittelbar vor der Einlaßöffnung des Dresch- und Trenntrommelgehäuses angeordnet ist. Durch die Heranführung der Einzugsschnecke bis an den Umfangsbereich der Dresch- und Trennorgane erhält man eine sehr kompakte kurze Erntebergungsvorrichtung, ohne daß dadurch die Dresch- und Trennwirkung negativ beeinflußt wird. Da mit einem Minimum an Förderorganen ausgekommen werden kann, läßt sich auch der gesamte Förderweg des Erntegutes verkürzen. Gleichzeitig ist ein ungehinderter Zugang zu der Dresch- und Trennvorrichtung möglich, wenn der vordere Teil der Erntebergungsvorrichtung abgenommen wird. Der Zugang zur Dresch- und Trennvorrichtung wird auch dadurch erleichtert, daß im Bereich der Durchlaßöffnung zwischen der Einzugsschnecke und der Dresch- und Trennvorrichtung keine weiteren Arbeitsorgane vorgesehen sind. Eine einwandfreie Förderung des Erntegutes zur Dresch- und Trenntrommel erhält man dadurch, daß der Achsabstand zwischen der Einzugsschnecke und der Dresch- und Trenntrommel gleich oder 1,1 mal der Summe der Radien von Einzugsschnecke und Dresch- und Trenntrommel ist und daß der muldenförmige Boden der Einzugsschnecke über eine ansteigende Rampe mit dem Dresch- und Trenntrommelgehäuse verbunden ist. Eine kompakte Bauweise der Erntebergungsvorrichtung erhält man auch dadurch, daß die Einzugsschnecke tangential an das Dresch- und Trenntrommelgehäuse angrenzt und das Dresch- und Trenntrommelgehäuse an mindestens einem Ende der Dresch- und Trenntrommel eine Einlaßöffnung gegenüber der Abgabeseite der Einzugsschnecke aufweist.

Um einen effektiven Ausdrusch des Erntegutes zu gewährleisten, ist es vorteilhaft, daß die Länge der Dresch- und Trennvorrichtung größer ist als die Breite des Schrägfördergehäuses. Hierzu ist es ferner vorteilhaft, daß die Länge der unterhalb der Dresch- und Trennvorrichtung vorgesehenen Förderschnecke zumindest so lang ist wie die seitliche Ausdehnung der Dresch- und Trennvorrichtung. Außerdem ist es vorteilhaft, daß die Breite des sich an die Förderschnecke anschließenden Schrägfördergehäuses in etwa der Breite der über das Schrägfördergehäuse beschickbaren Reinigungsvorrichtung entspricht.

In weiterer Ausgestaltung der Erfindung ist es vorteilhaft, daß die Reinigungsvorrichtung aus einem am Ende des Schrägfördergehäuses angeordneten Zuführboden und Sieben gebildet ist.

Eine vorteilhafte Beschickung des der Dresch- und Trennvorrichtung nachgeschalteten Elevatorförderers erhält man dadurch, daß die unterhalb der Dresch- und Trennvorrichtung vorgesehene und mit Bezug auf die Dresch- und Trennvorrichtung nachgeordnete Förderschnecke in einer Mulde mit einem an der Abgabeseite der Förderschnecke vorgesehenen ansteigenden Bodenteil angeordnet ist, dessen Abgabeende in etwa in der Höhe der oberen Seite des Elevatorförderers derart endet, daß das Erntegut auf der oberen Seite des Elevatorförderers abgelegt wird. Hierzu ist es vorteilhaft, daß die geometrische Verlängerung des ansteigenden Bodenteils der Mulde sich in etwa tangential an der Oberseite des unteren Teils des Elevatorförderers vorbei erstreckt.

In weiterer Ausgestaltung der Erfindung ist es vorteilhaft, daß die Einzugsschnecke der Auslaßöffnung gegenüber angeordnete und sich radial erstreckende Förderleisten aufweist, die das Erntegut über eine ansteigende Rampe der Dresch- und Trenntrommel radial und tangential zuführt, wobei die geometrische Verlängerung der Rampe sich in etwa tangential am Außenumfang der Dresch- und Trenntrommel vorbei erstreckt. Durch die ansteigende Rampe, die tangential an den Außenumfang der Dresch- und Trenntrommel herangeführt ist, wird eine einwandfreie Beschikkung der Dresch- und Trenntrommel ohne Zwischenschaltung von zusätzlichen Förderorganen gewährleistet. Hierzu ist es vorteilhaft, daß die Rampe die Querebene der Dresch- und Trenntrommel unterhalb der Achse an einer Stelle schneidet, die einen Abstand aufweist, der zwischen einem Betrag von 0,5 und 1,0 des Dresch- und Trenntrommelradius liegt. Die kompakte Bauweise der Erntebergungsvorrichtung wird auch dadurch begünstigt, daß das Dresch- und Trenntrommelgehäuse tangential an eine Rückwand eines Gehäuses der Einzugsschnecke angrenzt. Dabei kann es vorteilhaft sein, daß das Verhältnis des Durchmessers der Einzugsschnecke nicht größer als 1 ist. Vorteilhaft ist es außerdem, daß die Achse der Dresch- und Trenntrommel hinter der Einzugsschnecke liegt.

Um eine verlustfreie Beschickung des der Dresch- und Trennvorrichtung nachgeschalteten Elevatorförderers zu gewährleisten, ist es vorteilhaft, daß die im Dresch- und Trenntrommelgehäuse bzw. im zugehörigen Dresch- und Trennkorb vorgesehenen Öffnungen im Bereich der Rückseite und zumindest teilweise im Bereich der Unterseite der Dresch- und Trenntrommel vorgesehen sind. Hierzu ist es ferner vorteilhaft, daß zumindest ein Teil der Öffnungen derart im Dresch- und Trennkorb oder im Dresch- und Trenntrommelgehäuse angeordnet ist, daß ein Teil des Erntegutes direkt dem Elevatorförderer aufgegeben wird.

In weiterer Ausgestaltung der Erfindung ist es vorteilhaft, daß im Bereich der Rückseite des Dresch- und Trenntrommelgehäuses schnell lösbare Kupplungselemente vorgesehen sind, zu denen ein am Dresch- und Trenntrommelgehäuse vorgesehenes Kupplungsteil gehört, das mit einem am Schrägfördergehäuse vorgesehenen Kupplungsteil in Eingriff bringbar ist. Durch Verwendung schnell lösbarer Kupplungselemente zur Verbindung des Dresch- und Trenntrommelgehäuses mit dem Schrägfördergehäuse ist einmal eine leichte Austauschbarkeit der Erntebergungsvorrichtung gegen eine andere Erntebergungsvorrichtung, beispielsweise gegen einen Pflückvorsatz, gegeben, zum anderen wird bei Beschädigung der Dresch- und Trennvorrichtung der Zugang zu dieser Vorrichtung wesentlich erleichtert. Ebenso können ernsthafte Verstopfungen durch Trennen der Erntebergungsvorrichtung von dem Schrägfördergehäuse in kürzester Zeit auf einfachste Weise beseitigt werden, wenn eine derartige Verstopfung durch Drehrichtungsumkehr der Arbeitsorgane nicht beseitigt werden kann. Hierzu ist es vorteilhaft, daß das am Schrägfördergehäuse vorgesehene Kupplungsteil als Kupplungsrahmen ausgebildet ist, dessen plane Kupplungsfläche tangential zur Kupplungsfläche des am Dresch- und Trenntrommelgehäuse vorgesehenen Kupplungsteils verläuft.

Da das Gehäuse der Erntebergungsvorrichtung unmittelbar hinter der Rückseite des Dresch- und Trennkorbes eine vertikal verlaufende Rückwand mit einer Durchlaßöffnung aufweist, die gegenüber dem Aufnahmeteil des im Schrägfördergehäuse vorgesehenen Elevatorförderers derart angeordnet ist, daß das Erntegut direkt dem Elevatorförderer aufgegeben werden kann. Somit kann ein Gutsstau im Bereich der Übergangsstelle zwischen der Dresch- und Trennvorrichtung und dem Elevatorförderer vermieden werden.

Da oberhalb des Schrägfördergehäuses am hinteren oberen Teil des Dresch- und Trenntrommelgehäuses eine Antriebswelle zum Antrieb der einzelnen Arbeitsorgane der Erntebergungsvorrichtung vorgesehen ist, wird die Antriebsübertragung zwischen der Verbrennungskraftmaschine und den einzelnen Arbeitsorganen, die im Schrägfördergehäuse bzw. in der Erntebergungsvorrichtung angeordnet sind, erleichtert und verbilligt, zumal mit wenigen Antriebsmitteln ausgekommen werden kann.

Nach einem anderen Vorschlag sind die Erntebergungsvorrichtung mit der Dresch- und Trennvorrichtung, der Verbrennungsmotor und die Reinigungsvorrichtung auf einer vorderen auf Laufrädern abstützbaren Rahmeneinheit angeordnet, die über eine annähernd vertikal verlaufende Schwenkachse mit einer hinteren ebenfalls auf Laufrädern abstützbaren Rahmeneinheit gelenkig verbunden ist, auf der der Sammelbehälter angeordnet ist. Hierdurch wird insbesondere auf der hinteren Rahmeneinheit der gesamte Freiraum für einen Sammelbehälter zur Verfügung gestellt, so daß eine sehr große Tankkapazität mit niedrigliegendem Schwerpunkt geschaffen werden kann. Es kann jedoch auch der Sammelbehälter auf einem starren, durchgehenden Rahmen mit zwei Laufrädern zwischen der Dresch- und Trennvorrichtung und dem Verbrennungsmotor vorgesehen sein.

Besonders vorteilhaft ist, daß die Dresch- und Trennvorrichtung zwischen der Einzugsschnecke und dem am Schrägfördergehäuse angeordneten Kupplungsrahmen vorgesehen ist, der als Schnellkupplungsrahmen mit Kupplungselementen ausgebildet ist, die in an der Erntebergungsvorrichtung vorgesehene Gegenstücke einführbar bzw. einrastbar sind und die Erntebergungsvorrichtung am Schrägfördergehäuse sichern. Da der Kupplungsrahmen in der Nähe der Dresch- und Trennvorrichtung vorgesehen ist, können die einzelnen Arbeitsorgane nach Abnahme der Erntebergungsvorrichtung relativ einfach gewartet werden, da keine weiteren Bauteile mehr an der Erntebergungsvorrichtung entfernt zu werden brauchen. Somit lassen sich auch Verstopfungen, die beispielsweise bei sehr feuchtem Gut innerhalb der Dresch- und Trennvorrichtung auftreten können,auch nach Abnahme der Erntebergungsvorrichtung relativ leicht beseitigen. Somit erhält man eine sehr kompakte, kostengünstige und leicht zu wartende Erntebergungsvorrichtung,in der alle notwendigen Arbeitsorgane zum Ausdrusch des Erntegutes integriert worden sind. Um bei relativ breiten Erntebergungsvorrichtungen bzw. mehrreihigen Pflückvorsätzen eine wirkungsvolle Dresch- und Trennwirkung zu erzielen, ist es vorteilhaft, daß zwei koaxial zueinander verlaufende Dresch- und Trenntrommeln in je einem Gehäuseabschnitt der Erntebergungsvorrichtung angeordnet sind, die an ihren gegenüberliegenden Enden über je eine im Gehäuseabschnitt vorgesehene Einlaßöffnung beschickt werden, der sich radial erstreckende, auf dem Mittelabschnitt der Einzugsschnecke vorgesehene Förderleisten zugeordnet sind, wobei jeweils am außenliegenden Ende des Gehäuseabschnitts je eine Auslaßöffnung zur Abgabe von ausgedroschenen Strohteilen vorgesehen ist, während die Auslaßöffnung zum Durchlaß des ausgedroschenen Erntegutes in das Schrägfördergehäuse gegenüber den beiden Einlaßöffnungen der Gehäuseabschnitte vorgesehen ist. Durch die an der Einzugsschnecke vorgesehenen sich radial erstreckenden Förderleisten wird bereits eine Dreschwirkung erzielt, so daß das ausgedroschene Erntegut unmittelbar über die auf der gleichen Längsmittelebene liegende Auslaßöffnung dem Elevatorförderer im Schrägfördergehäuse aufgegeben werden kann, während das übrige Erntegut sich in Axialrichtung des Dresch- und Trenntrommelgehäuses bewegt, so daß auf diesem Weg die restlichen Erntegutteile über den Dreschkorb ausgeschieden werden können. Alle übrigen Erntegutbestandteile werden über die entsprechende Auslaßöffnung am Ende des Gehäuseabschnittes nach außen abgegeben. Damit wird auch eine Entlastung der der Dresch- und Trennvorrichtung nachgeschalteten Arbeitsorgane ermöglicht, da nur ein sehr kleiner Anteil des Erntegutes und Kaffteile durch das Schrägfördergehäuse bewegt werden.

In der Zeichnung sind mehrere Ausführungsbeispiele eines Mähdreschers nach der Erfindung schematisch dargestellt. Es zeigt:

Fig. 1 eine Seitenansicht eines Mähdreschers;

Fig. 2 ein anderes Ausführungsbeispiel eines Mähdreschers mit Knicklenkung;

Fig. 3 eine Teilansicht von Einzugsorganen einer Erntebergungsvorrichtung;

Fig. 4 eine Seitenansicht der Erntebergungsvorrichtung für Getreide für einen Mähdrescher gemäß Fig. 2 mit nach den Einzugsorganen vorgesehener Trennvorrichtung;

Fig. 5 eine Draufsicht des Mähdreschers gemäß Fig. 1 mit einer Erntebergungsvorrichtung für Mais;

Fig. 6 eine ähnliche Ansicht wie in Fig. 5, wobei die Erntebergungsvorrichtung des Mähdreschers mit zwei koaxial zueinander angeordneten Trennvorrichtungen ausgerüstet ist;

Fig. 7 einen Querschnitt entlang der Linie 7-7 gemäß Fig. 5;

Fig. 8 ein weiteres Ausführungsbeispiel einer Erntebergungsvorrichtung im Schnitt;

Fig. 9 einen Teilquerschnitt entlang der Linie 9-9 gemäß Fig. 5;

Fig. 10 eine Teilansicht entlang der Linie 10-10 gemäß Fig. 11;

Fig. 11 einen Teilquerschnitt der Erntebergungsvorrichtung ähnlich wie in Fig. 7, jedoch entlang der Linie 11-11 gemäß Fig. 10, wobei in dieser Figur die mittleren Abstützteile der beiden Trennvorrichtungen gemäß Fig. 6 dargestellt sind.

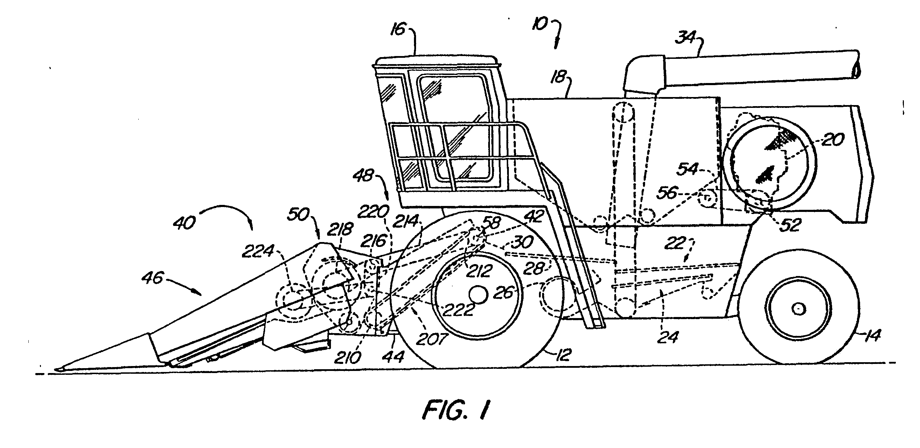

In der Zeichnung ist mit 10 ein Mähdrescher bezeichnet (Fig. 1), der zwei vordere Laufräder 12 sowie zwei hintere steuerbare Laufräder 14 aufweist. Eine Fahrerkabine 16 befindet sich vor einem Sammelbehälter 18 etwas auf der linken Seite des Mähdreschers 10. Der Mähdrescher 10 wird über einen Verbrennungsmotor 20 angetrieben.

Eine Reinigungsvorrichtung 22 befindet sich im unteren Bereich des Mähdreschers unterhalb des Sammelbehälters 18 und weist zwei schwingend gelagerte Siebe 24 sowie ein Reinigungsgebläse 26 zur Windbeaufschlagung der Siebe auf. Das Erntegut wird den Sieben 24 über einen schwingend gelagerten Zuführboden 28 aufgegeben, dessen vordere Kante unterhalb und etwas vor dem unteren Ende einer geneigt verlaufenden Zuführplatte 30 endet, die am Rahmen des Mähdreschers 10 angeordnet ist. Das gereinigte Erntegut wird über einen Elevatorförderer in den Sammelbehälter 18 gefördert, der über eine Entleerungsvorrichtung 34 entleert werden kann.

Eine Erntebergungsvorrichtung 40 ist am vorderen Ende des Mähdreschers 10 angeordnet und weist hierzu entsprechende Schwenkzapfen 42 auf. Wie aus Fig. 1 hervorgeht sind die Schwenkzapfen 42 beiderseits der Erntebergungsvorrichtung 40 so angeordnet, daß die Erntebergungsvorrichtung mittels Hydraulikzylinder 44 um eine quer zur Fahrtrichtung verlaufende horizontale Achse angehoben bzw. abgesenkt werden kann. Die Erntebergungsvorrichtung 40 weist eine Schneidwerksplattform, beispielsweise einen Pflückvorsatz 46 auf, der an ein Schrägfördergehäuse 48 angeschlossen ist. Zwischen der Schneidwerksplattform 46 und dem Schrägfördergehäuse 48 befindet sich eine Dresch- und Trennvorrichtung 50.

Der Antrieb der einzelnen Arbeitsorgane der Erntebergungsvorrichtung 40 erfolgt über eine Zapfwelle 52 des Verbrennungsmotors 20 sowie über mit der Zapfwelle 52 verbundene Zugmittelgetriebe. In der Zeichnung ist in Fig. 1 lediglich das Zugmittelgetriebe 54 mit der zugehörigen Abtriebswelle 56 dargestellt. Im vorderen Bereich des Mähdreschers 10 befindet sich eine weitere, über den Verbrennungsmotcr 20 mittelbar angetriebene Antriebswelle 58, die koaxial zu den Schwenkzapfen 42 der Erntebergungsvorrichtung 40 verläuft.

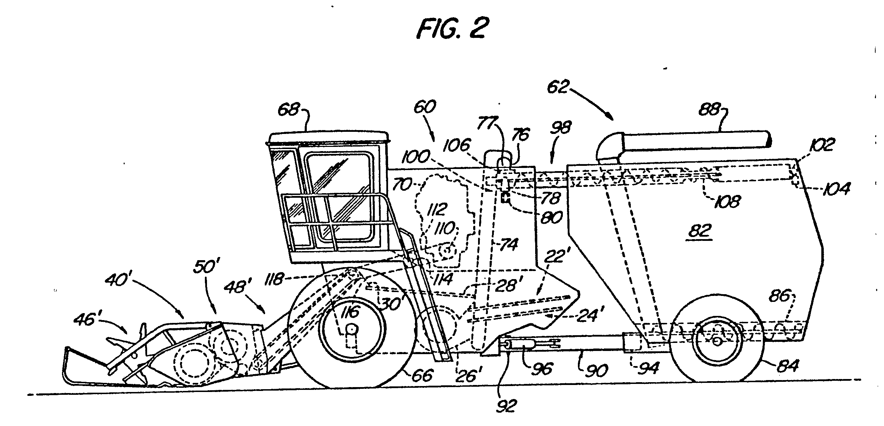

In einem anderen Ausführungsbeispiel gemäß Fig. 2 besteht der Mähdrescher 10 aus zwei gelenkig miteinander verbundenen Rahmeneinheiten 60 und 62. An der vorderen Rahmeneinheit 60 ist die Erntebergungsvorrichtung 40' angeschlossen.

Die vordere Rahmeneinheit 60 weist eine Laufradachse mit Laufrädern 66 auf, über denen die Fahrerkabine 68 sowie ein Verbrennungsmotor 70 angeordnet sind. Ferner befindet sich auf der vorderen Rahmeneinheit 60 unterhalb des Verbrennungsmotors 70 eine Reinigungsvorrichtung 22'. Die Reinigungsvorrichtung 22', die in etwa der Reinigungsvorrichtung 22 entspricht, ist aus entsprechenden Sieben 24', einem Reinigungsgebläse 26', einem Zuführboden 28' und einer Zuführplatte 30' gebildet. Das gereinigte Erntegut gelangt aus der Reinigungsvorrichtung 22' zu einem Elevatorförderer 74 und dann über eine Querförderschnecke 76 zu einer nach unten gerichteten Auslaßöffnung 77, die in etwa auf der Mittellinie der vorderen Rahmeneinheit 80 liegt. Unterhalb der Auslaßöffnung 77 befindet sich eine Gelenkanordnung 78 zur Verschwenkung der beiden Rahmeneinheiten 60 und 62 um eine vertikal verlaufende Achse. Die Gelenkanordnung 78 ist auf einem Querträger 80 der vorderen Rahmeneinheit 60 angeordnet. Die hintere Rahmeneinheit 62 besteht im wesentlichen aus einem Sammelbehälter 82, der sich auf Laufrädern 84 abstützt. Die Entleerung des Sammelbehälters 82 erfolgt über eine am Boden des Sammelbehälters 82 vorgesehene Entleerungsvorrichtung 86, die aus zahlreichen nebeneinander angeordneten Förderschnecken bestehen kann, über die das Erntegut einer Austragfördervorrichtung 88 zugeführt wird, die am Sammelbehälter schwenkbar gelagert ist.

Die hintere Rahmeneinheit 62 ist über eine obere und eine untere, einen großen Abstand überbrückende Gelenkverbindung mit der vorderen Rahmeneinheit 60 derart verbunden, daß eine gegenseitige Verschwenkung der beiden Rahmeneinheiten 60, 62 um eine vertikal verlaufende und eine horizontal verlaufende Achse möglich ist. Die untere Gelenkverbindung weist eine Anhängevorrichtung 90 auf, die mit ihrem vorderen Ende über einen Kupplungsbolzen 92 an die vordere Rahmeneinheit 60 vertikal schwenkbar angeschlossen ist. Der Kupplungsbolzen 92 veräuft auf der gleichen vertikalen Achse wie die Achse der Gelenkanordnung 78. Die Anhängevorrichtung 90 weist eine Lagerbuchse 94 auf, in der die Anhängevorrichtung 90 drehbar aufgenommen is, so daß die hintere Rahmeneinheit 62 gegenüber der vorderen Rahmeneinheit 60 um eine horizontal verlaufende Längsachse schwenken kann. Zwischen der vorderen Rahmeneinheit 60 und der Anhängevorrichtung 90 befinden sich Lenkzylinder 96, über die der Mähdrescher gesteuert wird, wobei die gegenseitige Verstellung der beiden Rahmeneinheiten um die vertikal verlaufende Achse erfolgt.

Die obere Gelenkverbindung zwischen der vorderen und hinteren Rahmeneinheit 60 und 62 besteht aus einem oberen Lenker 98, der einenends an die vordere Rahmeneinheit 60 und anderenends an die hintere Rahmeneinheit 62 angeschlossen ist und als Fördervorrichtung ausgebildet sein kann. Die Gelenkanordnung 78 kann beispielsweise als Kardangelenk 100 ausgebildet sein, das den oberen Lenker 98 mit dem Querträger 80 der vorderen Rahmenéinheit 60 verbindet. Das hintere Ende des oberen Lenkers 98 ist über ein Kugelgelenk 102 im Bereich der Rückseite des Sammelbehälters 82 an der hinteren Rahmeneinheit 62 angeschlossen. Das Kugelgelenk 102 ist hierzu auf einen Rahmenteil 104 des Sammelbehälters 82 angeordnet. Das Kugelgelenk 102 sowie das Kardangelenk 100 verlaufen auf der Längsmittelebene des Mähdreschers. Das Erntegut wird von der vorderen Rahmeneinheit 60 über die Auslaßöffnung 77 in eine Einlaßöffnung 106 des als Förderorgan ausgebildeten Lenkers 98 aufgegeben. Der üls Förderorgan ausgebildete obere Lenker 98 weist eine Auslaßöffnung 108 auf, über die das Erntegut in den Sammelbehälter 82 gelangt.

Der Antrieb der einzelnen Arbeitsorgane erfolgt über eine Zapfwelle 110 des Verbrennungsmotors 70. Die Zapfwelle 110 steht über ein Zugmittelgetriebe 112 mit einer Abtriebswelle 114 in Antriebsverbindung und ferner mit einem Zugmittelgeriebe 116 zum Antrigb einer Antriebswelle 118 eines im Schrägfördergehäuse 48 an eordneten Elevatorförderers. Über das Zugmittelgetriebe 116 lassen sich weitere Antriebe für die Arbeitsorgane der Erntebergungsvorrichtung 40' antreiben.

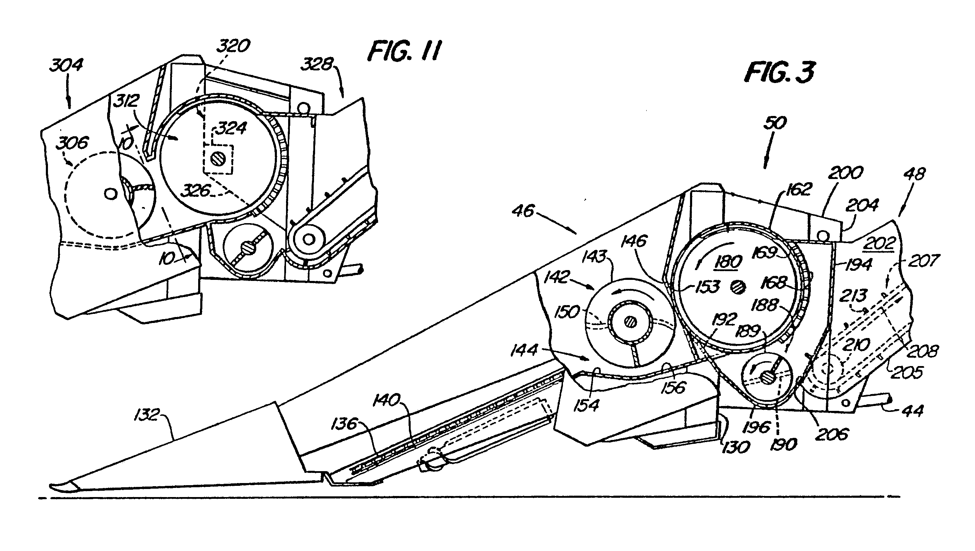

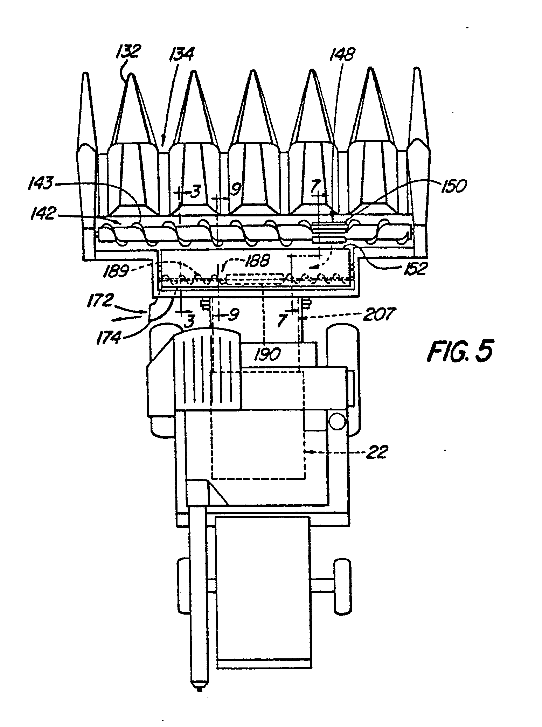

Der Mähdrescher 10 kann mit zahlreichen verschiedenartig ausgebildeten Erntebergungsvorrichtungen ausgerüstet werden. Nach der vorliegenden Erfindung ist der Mähdrescher so ausgebildet, daß er jede beliebige Erntebergungsvorrichtung aufnehmen kann. Nachfolgend sind gemäß Fig. 1 und 2 zwei unterschiedlich ausgebildete Erntebergungsvorrichtungen 40 bzw. 40' erläutert. In Fig. 1 ist die Erntebergungsvorrichtung 40 als Pflückvorsatz 46, beispielsweise für Mais oder für Sojabohnen ausgebildet, während im Ausführungsbeispiel gemäß Eig. 2 die Erntebergungsvorrichtung 40' als Schneidwerksplattform 46' zur Ernte von Getreide dient. Eine jede Erntebergungsvorrichtung 40 bzw. 40' weist eine entsprechende Dresch- und Trennvorrichtung 50 bzw. 50' auf. Der vordere Teil der Erntebergungsvorrichtung 40 mit dem pflückvorsatz 46 ist in Fig. 3 näher veranschaulicht. Der Pflückvorsatz 46 weist die Dresch- und Trennvorrichtung 50 auf, die über einen Tragrahmen 130 in der Erntebergungsvorrichtung 40 integriert ist. Der Pflückvorsatz 46 dient zum Ernten von Reihenfrüchten und weist hierzu Teilerspitzen 132 auf, über die das Erntegut bzw. die Stengel in den Einlaßkanal 134 gelangen (siehe Fig. 5). Ferner ist der Pflückvorsatz 46 mit Einzugsketten 136 ausgerüstet, über die Kolben von ihren Stengeln abgezogen werden, wenn sie über die Platten 140 geführt werden. Die Einzugsketten 136 leiten die Kolben nach hinten und oben in den Einzugsbereich einer Einzugsschnecke 142, die am oberen Ende, hinter den Einzugsketten 136 angeordnet ist (siehe auch Fig. 5). Die Einzugsschnecke 142 ist mit zwei Schneckenwendeln 143 ausgerüstet, die mit dem Boden 144 und einer Rückwand 146 zusammenwirken, so daß das Erntegut von der linken und rechten Seite des Pflückvorsatzes 46 zu einer Austragstelle 148 (siehe Fig. 5) zusammengeführt wird, die sich im rechten Bereich des Pflückvorsatzes 46 befindet. Im Bereich der Austragstelle 148 sind die Schneckenwendeln 143 unterbrochen und anstelle der Schneckenwendeln sind sich radial erstreckende Förderleisten 150 vorgesehen, die das Erntegut nach hinten und nach oben durch eine Auslaßöffnung 152 der Rückwand 146 bewegen, wobei die Auslaßöffnung durch eine obere, horizontal verlaufende Kante 153 begrenzt wird (Fig. 3). Um die Förderwirkung und den Transport des Erntegutes durch die Auslaßöffnung 152 zu unterstützen umgibt der Boden 144 ein wenig die Einzugsschnecke 142. Der Boden 144 besteht hierzu aus einem in etwa horizontal verlaufenden Bodenteil 154 und einem hinteren, mit Bezug auf die normale Lage des Pflückvorsatzes gemäß Fig. 3 geneigt verlaufenden Bodenteil 156.

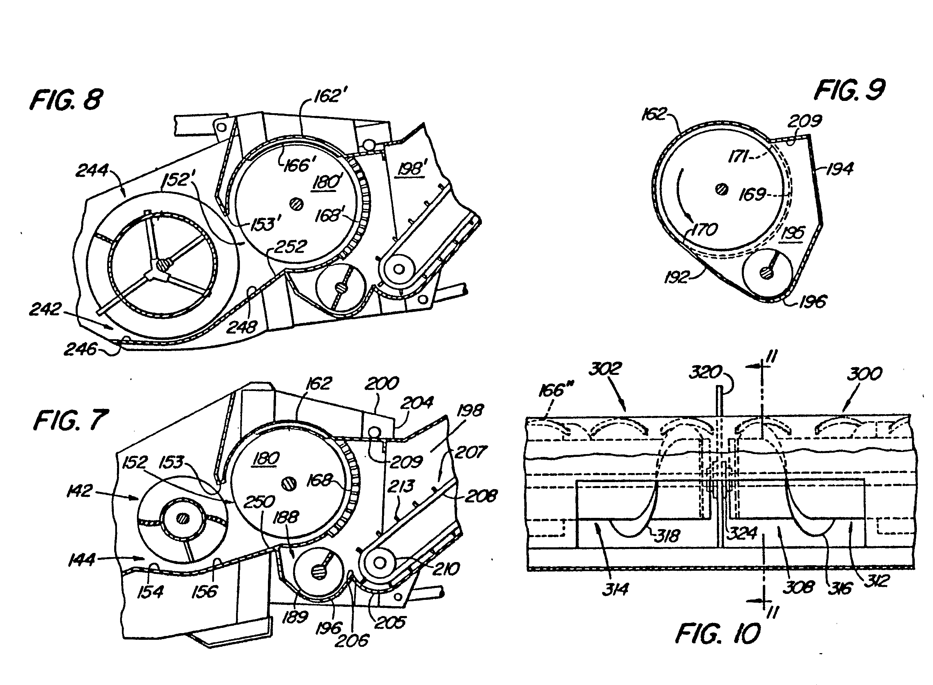

Die Dresch- und Trennvorrichtung 50 in der Erntebergungsvorrichtung 40 besteht aus einer drehbar gelagerten Dresch- und Trenntrommel 180, das in einem zylindrischen Dresch- und Trenntrommelgehäuse 162 angeordnet ist, das tangential zur Vorderwand 146 verläuft. Die Vorderwand 146 ist aufgeschnitten, so daß die Auslaßöffnung 152 gleichzeitig Einlaßöffnung im Dresch- und Trenntrommelgehäuse 162 ist. Ein Teil des Dresch- und Trenntrommelgehäuses 162 ist mit einem zahlreiche Durchdringungen aufweisenden Dresch- und Trennkorb 168 versehen (Fig. 3 und Fig. 7).

Der Dresch- und Trennkorb 168 befindet sich am stromaufwärtsliegenden Ende und weist zahireiche Durchlaßöffnungen 169 auf. Wie aus Fig. 9 hervorgeht wird der Dresch- und Trennkorb 168 durch eine untere Kante 170 und eine obere Kante 171 begrenzt. Am unten gelegenen Teil des Dresch- und Trenntrommelgehäuses 162 befindet sich eine Auslaßöffnung 172 (siehe Fig. 5) und außerhalb des Dresch- und Trenntrommelgehäuses 162 ein Leitorgan 174 zur Steuerung der Richtung des Erntegutflußes wenn es durch die Auslaßöffnung 172 bewegt wird.

Die zylindrische Dresch- und Trenntrommel 180 ist drehbar im Dresch- und Trenntrommelgehäuse 162 angeordnet und weist zahlreiche in der Zeichnung jedoch nur in Fig. 10 dargestellte Dresch- und Trennleisten auf, die sich in etwa über die gesamte Breite der Dresch- und Trenntrommel erstrecken können und mit dem Dresch- und Trennleisten dienen einmal zur Förderung des Erntegutes im Dresch- und Trenntrommelgehäuse und gleichzeitig zum Dreschen und Trennen des Erntegutes.

Die Dresch- und Trennvorrichtung 50 weist ferner eine Schneckenwendeln 189 aufweisende Förderschnecke 188 auf, deren Achse parallel zur Achse der Dresch- und Trenntrommel 180 verläuft. Die Achse der Förderschnecke 188 liegt mit Bezug auf die Förderrichtung der Dresch- und Trenntrommel 180 etwas hinter ihrer Achse. Im mittleren Bereich ist die Schneckenwendel 189 unterbrochen und weist sich radial erstreckende Förderleisten 190 auf, die in etwa die gesamte Breite des Schrägfördergehäuses 48 überspannen (siehe Fig. 5).

Wie aus Fig. 9 hervorgeht, weist das Dresch- und Trenntrommelgehäuse 162 einen nach unten geneigt verlaufenden Boden 192 und eine Rückwand 194 auf, die in etwa die gesamte Länge des Dresch- und Trenntrommelgehäuses 162 überspannen und einen Aufnahmetrog 195 bilden und den Teil des Dresch- und Trennkorbes 168 abdecken, der mit den zahlreichen Öffnungen 169 versehen ist. Der Boden 192 sowie die Rückwand 194 laufen zu einer Mulde 196 zusammen, in der die Förderschnecke 188 angeordnet ist. In dem geneigt verlaufenden Boden 192 befindet sich die Auslaßöffnung 152 (siehe Fig. 5 und Fig. 7) zur Aufnahme des aus dem Schrägfördergehäuse abgegebenen Erntegutes. In der Rückwand 194 ist ebenfalls eine Durchlaßöffnung 198 vorgesehen, die zum Durchlaß des Erntegutes aus der Dresch- und Trennvorrichtung 50 zum Schrägfördergehäuse 48 (siehe Fig. 7) dient und die die gesamte Breite des Schrägfördergehäuses überspannt. Die Durchlaßöffnung 198 wird von einem rechteckförmigen Kupplungsrahmen 200 umgeben, der auch teilweise die Durchlaßöffnung 198 bildet und Bestandteil des Dresch- und Trenntrommelgehäuses 162 ist. Die Wände des Schrägfördergehäuses 48 bilden einen im wesentlichen rechteckförmig ausgebildeten Förderkanal 202, der an seinem vorderen Ende durch einen rechteckförmigen Kupplungsrahmen 204 begrenzt wird (Fig. 3). Damit die Schneidwerksplattform 46 gemeinsam mit der Dresch- und Trennvorrichtung 50 an das Schrägfördergehäuse 48 angekuppelt werden kann. Das Schrägfördergehäuse 48 weist einen geneigt verlaufenden Boden 205 auf, dessen vorderer unterer Teil muldenförmig ausgebildet ist und dessen vordere Kante 206 gleichzeitig die Kante der Mulde 196 der Förderschnecke 188 ist. Die Kante 206 bildet die untere Begrenzung der Durchlaßöffnung 198 für das Schrägfördergehäuse 48. Die obere Begrenzung der Durchlaßöffnung 198 wird durch die obere Wand 209 (Fig. 7) der Dresch- und Trennvorrichtung 50 gebildet. In dem Schrägfördergehäuse 48 befindet sich ein Elevatorförderer 207 mit einer Elevatorkette 208, die um Führungsrollen 210 und 212 geführt ist. Die Elevatorkette 208 kann mit zahlreichen, parallel zueinander verlaufenden Förderleisten 213 oder auch als Gummiband ausgebildet sein an dessen Oberfläche zahlreiche Rippen vorgesehen sind. Das untere Aufnahmeende des Elevatorförderers 207 endet unmittelbar hinter den Förderleisten 190 der Förderschnecke 188 und fördert oberschlächtig das Erntegut durch das Schrägfördergehäuse 48.

Der Antrieb der Ernteübergungsvorrichtung bzw. der einzelnen Arbeitsorgane ist schematisch in Fig. 1 dargestellt. Der Antrieb wird von der Antriebswelle 58 abgenommen und über ein Zugmittelgetriebe 214 auf eine Welle 216 geleitet. Die antreibbaren Arbeitsorgane der Dresch- und Trennvorrichtung 50 werden direkt über die Welle 216 und ein Zugmittelgetriebe 218 angetrieben. Die Welle 216 steht über ein Zugmittelgetriebe 220 mit einer Welle 222 zum Antrieb einer Zugmittelscheibe 224 des Pflückvorsatzes 46 in Antriebsverbindung. Der Antriebswelle 58 kann ein in der Zeichnung nicht dargestelltes Antriebsmittel zugeordnet sein, um den Elevatorförderer in der gewünschten Richtung oberschlächtig anzutreiben. Durch die hohe Lage der Wellen 216 und 222 steht ausreichend Platz zur Verfügung, um das Erntegut ungehindert durch die Auslaßöffnung 172 zu bewegen. Weitere Antriebsmittel zum Antrieb der einzelnen Arbeitsorgane der Dresch- und Trennvorrichtung 50 und der Schneidwerksplattform 46 sind in der Zeichnung nicht weiter dargestellt.

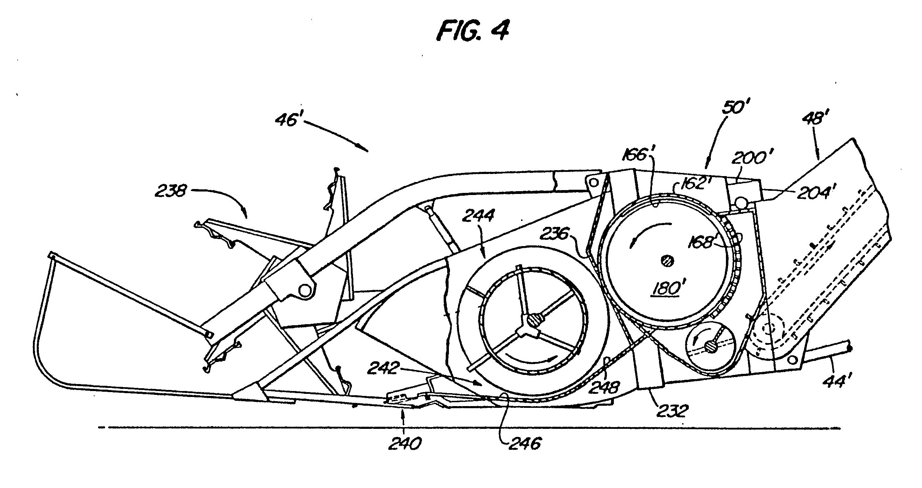

Wie aus den Fig. 2 und 4 hervorgeht weist die Dresch- und Trennvorrichtung 50' ähnliche wie die bereits beschriebenen Kupplungselemente auf, die zum Anschluß der Ernteübergungsvorrichtung 40' an das Schrägfördergehäuse 48' dienen. Hierzu gehört ein Rahmen 232 (Fig. 4) der zur Verbindung der Dresch- und Trennvorrichtung 50' mit der Schneidwerksplattform 46' dient. Das Dresch- und Trenntrommelgehäuse 162' tangiert eine Rückwand 236 der Schneidwerksplattform 46'.

Die Schneidwerksplattform 46' ist mit einer Haspel 238 und einem Schneidwerk 240 scwie mit einer über einem Boden 242 vorgesehenen Einzugsschnecke 244 ausgerüstet. Der Boden 242 weist einen in etwa horizontal verlaufenden Bodenteil 246 und einen nach hinten ansteigenden Bodenteil 248 auf, die sich beide tangential zu den Schneckenwendeln der Einzugsschnecke 244 erstrecken. Das von der Einzugsschnecke 244 erfaßte Erntegut wird über die Auslaßöffnung 152' der Dresch- und Trennvorrichtung 50' zugeführt. Im Ausführungsbeispiel gemäß Fig. 4 weist hierzu die Einzugsschnecke 244 entsprechend gesteuerte Zinken 249 auf, die das Erntegut tangential durch die Durchlaßöffnung 152' der Dresch- und Trennvorrichtung 50' aufgeben.

Im Arbeitseinsatz des Mähdreschers gemäß Fig. 1 und 2 wird also das Erntegut aufgenommen und der Auslaßöffnung 152 bzw. 152' zugeführt, um dann von der Dresch- und Trenntrommel 180 bzw. 180' in der beschriebenen Weise erfaßt und bearbeitet zu werden.

Wie aus Fig. 3 und 4 hervorgeht sind bei beiden Ausführungsformen Dresch- und Trenntrommeln 180 bzw. 180' vorgesehen, die einen relativ kleinen Durchmesser aufweisen und dicht an die Einzugsschnecke 142 bzw. 244 angrenzen, um somit den Totraum zwischen der Einzugsschnecke und der Trenntrommel auf ein Minimum zu beschränken und somit einen besseren Transport zwischen diesen Arbeitsorganen zu gewährleisten. Der relativ kleine Durchmesser der Trenntrommeln 180 bzw. 180' zeigt, daß die Anordnung der Trenntrommel hinter der Einzugsschnecke 142 bzw. 244 günstiger ist als oberhalb der Einzugsschnecke. Hierdurch wird der Neigungswinkel mit dem das Erntegut nach hinten in die Dresch- und Trennvorrichtung 50 geleitet wird reduziert, ohne daß dadurch der Schwerpunkt der Ernteübergungsvorrichtung zu weit nach vorne verlagert wird. Das Verhältnis des Abstandes zwischen der Einzugsschnecke 244 und der Dresch- und Trenntrommel 180 sowie die Radien der Einzugsschnecke 244 und der Dresch- und Trenntrommel 180 liegt in vorteilhafter Weise zwischen 1,0 und 1,1 und sollte auch nicht größer sein. Eine Ernteübergungsvorrichtung zum Ernten von Getreide mit einer wie in Fig. 4 dargestellten Ernteübergungsvorrichtung 40 muß in der Lage sein große Volumenanteile von Stroh, Kaff, Ähren oder dergleichen zu Fördern (also alle Volumenteile außer Korn). Dieses Erntegut wird der Einzugsschnecke 244 und dann der Dresch- und Trenntrommel 180 zugeführt. Bei Ernteübergungsvorrichtungen, insbesondere für Korn hat es sich als vorteilhaft herausgestellt, die Breite der Dresch- und Trennvorrichtung 50 zumindest an die Breite der Ernteübergungsvorrichtung 40 anzupassen. Bei einer derartigen Bemessung der Dresch- und Trennvorrichtung 50 wird ein guter Durchsatz aller Erntegutbestandteile gewährleistet und gleichzeitig die Trennkapazität sichergestellt. Dabei sollte der Durchmesser der Dresch- und Trenntrommel 180 nicht größer als der Durchmesser der Einzugsschnecke 244 sein.

Im Ausführungsbeispiel gemäß Fig. 3 und Fig. 4 sind die Bodenteile 246 bzw. 248 so angeordnet, daß sie in der Ebene der Hauptförderrichtung liegen, in der das Erntegut der Dresch- und Trenntrommel 180 bzw. 180' zugeführt wird, wobei das Ernteut an einer Stelle auf die Dresch- und Trenntrommel 180 trifft, die unterhalb des Dresch- und Trenntrommelmittelpunktes liegt. Der Abstand zwischen der Auftrittstelle und dem Dresch- und Trenntrommelmittelpunkt sollte nicht kleiner sein als der halbe Radius der Dresch- und Trenntrommel 180, um auf diese Weise einen Totraum zwischen der querverlaufenden Förderschnecke 188 und der Dresch- und Trenntrommel 180 klein zu halten (siehe Fig. 7 und 8). Um den Erntegutfluß zur Dresch- und Trenntrommel 180 bzw. 180' nach hinten aufrecht zu erhalten bzw. günstig zu beeinflußen, sind die Bodenteile 248 bzw. 156 über der Auslaßöffnung 152 bzw. 152' mit einem Verlängerungteil 250 bzw. 252 (Fig. 7, 8) versehen, die an das Dresch- und Trenngehäuse 162 bzw. 162' angrenzen. Die Bodenteile 154, 156 bzw. 246, 248 bilden mit den entsprechenden Verlängerungteilen 250, 252 eine ansteigende bzw. geneigt verlaufende Rampe zur Förderung bzw. Weiterleitung des Erntegutes in das Dresch- und Trenntrommelgehäuse 162 bzw. 162'.

Wie aus den Fig. 3 und 4 hervorgeht ist bei Verwendung eines Pflückvorsatzes gemäß Fig. 3 bzw. einer Schneidwerksplattform gemäß Fig. 4 die Neigung der Rampe bzw. des Bodenteils 156 bzw. 248 relativ flach. Der Bodenteil 156 kann bei Verwendung eines Pflückvorsatzes gemäß Fig. 3 auch annähernd horizontal verlaufen. Bei Verwendung einer Schneidwerksplattform gemäß Fig. 4 sollte der Winkel zwischen dem Bodenteil 248 und der Horizontalen nicht größer als 45° sein. An der Übergangsstelle zwischen der Einzugsschnecke 142 und der Dresch- und Trenntrommel 180 (Außslaßöffnung 152, 152') weist das Mais-Erntegut einen relativ kleinen Kaffanteil auf und das Erntegut wird weniger schnell nach oben bewegt als zum Beispiel bei konventionellen Erntemaschinen bei denen der Kaffbestandteil bei der Getreideernte sehr hoch ist.

Die zuvor beschriebenen Abmessungsverhältnisse zwischen der Einzugsschnecke 142, der querverlaufenden Förderschnekke 188 und der Dresch- und Trenntrommel 180 sowie dem Boden 144 unter der Einzugsschnecke 142 bewirken einen einwandfreien wirkungsvollen Transport des Erntegutes von der Einzugsschnecke 142 in den Einzugsbereich der Dresch- und Trenntrommel, ohne daß hierzu eine zusätzliche Fördervorrichtung, beispielsweise eine Schlagtrommelleiste notwendig wäre.

Im Ausführungsbeispiel gemäß Fig. 3 und 7 wirkt die Dresch- und Trenntrommel 180 mit dem Dresch- und Trenntrommelgehäuse 162 zusammen, wobei die Schneckenwendeln 166 an der Innenseite des Dresch- und Trenntrommelgehäuses 162 dazu beitragen, daß das Erntegut spiralförmig durch den zwischen der Außenoberfläche der Dresch- und Trenntrommel 180 und der Innenoberfläche des Dresch- und Trenntrommelgehäuses 162 gebildeten Ringraum bewegt wird. Das Stroh, das durch diesen Ringspalt bewegt wird, wird am stromabwärtsliegenden Ende der Dresch- und Trennvorrichtung über die Auslaßöffnung 172 abgeschieden und auf den Boden geworfen. Korn und ein wenig Kaff gelangt durch die Öffnungen 169 des Trennkorbes 168 und wird dann über den Boden 192 und die Rückwand 194 in die Mulde 196 (Fig. a) geleitet, um mittels der Förderleisten 190 der querverlaufenden Förderschnecke 188 dem Elevatorförderorgan 208 zugeführt zu werden.

Wie insbesondere aus den Fig. 7, 8 und 9 hervorgeht sind die öffnungen 189 im Dresch- und Trennkorb 188 vorzugsweise in deren hinteren, unteren Hälfte vorgesehen, so daß das ausgedroschene Erntegut in Richtung des Aufnahmetroges 195 geleitet wird. Das Dresch- und Trenntrommelgehäuse 162 grenzt tangential an die Rückwand 146 der Erntebergungsvorrichtung 40. Hierdurch werden die Baumaße bzw. die Außenabmessungen des Dresch- und Trommelgehäuses 182 sowie die Außenabmessungen des Bodens 144 und der Rückwand 146 klein gehalten, so daß man eine relativ kompakte Dresch- und Trennvorrichtung zusammen mit der Erntebergungsvorrichtung 40 erhält. Durch die große Nähe des Dreschund Trennkorbes 168 zu der Durchlaßöffnung 198 und dem unteren Teil des Elevatorförderers 207 wird zumindestens für den Bereich in dem der Dresch- und Trennkorbteil das Schrägfördergehäuse 48 überlappt, gewährleistet, daß zumindest ein Teil des Korns und des Kaffs durch die öffnungen 169 des Dresch- und Trennkorbes 168 radial nach außen bewegt wird und direkt dem Elevatorförderer 207 aufgegeben wird. Hierdurch wird der Förderwirkungsgrad weiterhin verbessert.

Die relativ hohe Lage der Förderschnecke 188 etwas hinter der Quermittelebene der Dresch- und Trenntrommel 180 und der ausreichende Abstand der Förderschnecke 188 zu dem Trenntrommelgehäuse 162 machen einen leichten Übergang des Korns und des Kaffs von der Erntebergungsvorrichtung 40 in das Schrägfördergehäuse 48 möglich. Die querverlaufende Förderschnecke 188 ist ferner ausreichend dicht vor dem unteren Aufnahmeteil des Elevatorförderers 207 angeordnet. Die Führungsrollen 210 des Elevatorförderers 207 können mit Bezug auf die querverlaufende Förderschnecke 188 so hoch angeordnet werden, daß ein tangentialer Austrag des Erntegutes mittels der Förderleisten 190 der querverlaufenden Förderschnecke möglich ist. Dabei wird das Erntegut in vorteilhafter Weise direkt im unteren Bereich und zwar oberschlächtig dem Elevatorförderer 207 zugeführt. Der Elevatorförderer 207 leitet das Korn und das Kaff der Reinigungsvorrichtung 22 über eine Zuführplatte 30 zu. Wie aus Fig. 5 hervorgeht, entspricht die Breite des Elevatorförderers 207 in etwa der Breite der Reinigungsvorrichtung 22, so daß hierdurch auf zusätzliche Förderelemente zur Verteilung des Korns und des Kaffgemisches auf der Reinigungsvorrichtung 22 verzichtet werden kann. In der Reinigungsvorrichtung 22 wird das Korn von dem Kaff getrennt und dann dem Sammelbehälter 18 zugeführt, der mittels der Entleerungsvorrichtung 38 entleert werden kann.

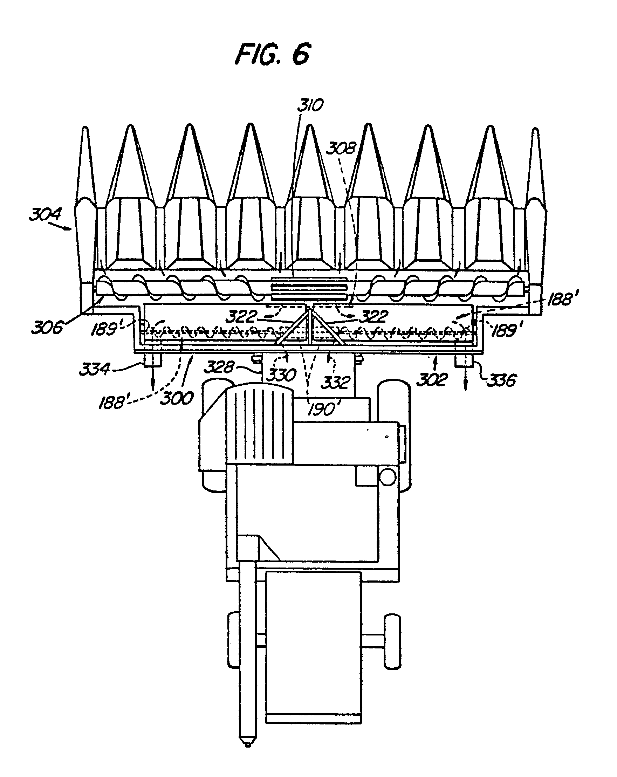

In den Fig. 6, 10 und 11 ist ein anderes Ausführungsbeispiel dargestellt, bei dem die Dresch- und Trennvorrichtung aus zwei koaxial angeordneten Dresch- und Trennorganen 302 besteht. Im Ausführungsbeispiel sind die beiden Dresch- und Trennorgane 300 und 302 für einen · achtreihigen Pflückvorsatz 304 vorgesehen (Fig. 6). Die Einlaß- oder Aufnahmeenden der Dresch- und Trenntrommel 180' reichen an die Längsmittelebene des Mähdreschers heran, während eine Einzugsschnecke 306 das Erntegut zur Mitte zusammenzieht und es einer einzigen Einlaßöffnung 308 zuführt, wobei dieser Fördervorgang durch sich radial erstreckende Förderleisten 310 unterstützt wird.

Wie aus Fig 10 hervorgeht, entspricht die Breite des linken und echten Aufnahmeteils der Dresch- und Trenntrommel 312 und 314 in etwa der Breite der Einlaßöffnung 308. Die beiden Dresch- und Trenntrommeln 312 und 314 weisen am Aufnahmeteil endseitig Schneckenwendeln 316 und 318 auf, die das Erntegut beschleunigt dem Bearbeitungsorgan der Dresch- und Trenntrommeln 312, 314 zuführen. Die Dresch- und Trenntrommeln 312 und 314 sind an ihren gegenüberliegenden Enden in einer Tragplatte 320 drehbar gelagert, die an der Rückseite des Pflückvorsatzes 304 mittels Tragarmen 322 befestigt ist. In der Tragplatte 320 sind ferner zur drehbaren Aufnahme der gegenüberliegenden Enden der Dresch- und Trenntrommeln 312 und 314 Lager 324 angeordnet, die beispielsweise als Wälzlager ausgebildet sein können. Durch die Verwendung der Tragplatte 320 wird relativ wenig Platz zwischen den Enden der beiden Dresch- und Trenntrommeln 312 und 314 beansprucht. Der zwischen den Enden der Dreschund Trennvorrichtung 312, 314 gebildete Spalt kann 35 mm oder weniger groß sein. Im Bereich der Tragplatte 320 wird der Gutstrom geteilt, sobald er von den Schneckenwendeln 316 und 318 erfaßt wird. Durch das Zusammenwirken der beiden Schneckenwendeln 316 und 318 mit den an der Innenseite der Dresch- und Trenntrommel 312, 314 vorgesehenen Schneckenwendeln 166'' wird das Erntegut relativ schnell stromabwärts gefördert. Durch die einteilige Ausbildung der Einlaßöffnung 308 wird eine gleichmäßige Beschickung der beiden Enden der Dresch- und Trenntrommeln 312 und 319 gewährleistet. Wie aus Fig. 6 hervorgeht sind die Förderleisten 310 der Einzugsschnecke 306 etwas schmäler als die Einlaßöffnung 308. Dadurch wird erreicht, daß das Erntegut mehr zur Mitte der Einlaßöffnung 308 zusammengeführt wird. Bei übermäßig starker Zufuhr des Erntegutes auf der einen oder auf der anderen Seite der Dresch- und Trenntrommel 312, 314 wird nach Passieren der Einlaßöffnung 308 der Gutstromfluß von den Aufnahmeteilen der Dresch- und Trenntrommel 312, 314 insbesondere von den Schneckenwendeln 314, 318 so erfaßt, das eine annähernd gleichmäßige Aufteilung des Erntegutes erfolgt, um es dann in zwei getrennten Gutströmen dem Bearbeitungsorgan der beiden Dresch- und Trenntrommeln zuzuführen. Das die Einlaßöffnung 308 passierende Erntegut wird sofort stromabwärts geleitet und setzt sich aufgrund der nach hinten geneigt verlaufenden Stirnkante 326 der Tragplatte 320 (Fig. 11) nicht an der Tragplatte fest.

Die beiden von den Dresch- und Trenntrommeln 312 und 314 abgegebenen Erntegutströme von Korn und Kaff gelangen zur Förderschnecke 188' und dann in das Schrägfördergehäuse 328. Die Gutströme sind durch die pfeile 330 und 332 in Fig. 6 gekennzeichnet. Am jeweiligen stromabwärtsliegenden Ende der Dresch- und Trennorgane 300 und 302 wird Stroh über die Auslaßöffnungen 334 bzw. 336 ausgeschieden. Die Auslaßöffnungen 334, 336 liegen dabei außerhalb der seitlichen Begrenzung des Mähdreschergehäuses.

Durch die vorteilhafte Ausbildung und Anordnung einer Erntebergungsvorrichtung mit einer Dresch- und Trennvorrichtung für einen Mähdrescher mit oder ohne Knicklenkung erhält man eine sehr kompakte Bauweise, die die Manövrierfähigkeit des Mähdreschers begünstigt und ebenso einen leichteren Transport, da relativ wenig Platz für Dresch- und Trennorgane beansprucht wird. Ferner wird durch die vorteilhafte Anordnung der Dresch- und Trennorgane in der Erntebergungsvorrichtung eine kompakte Bauweise ermöglicht und das Gesamtgewicht reduziert.

Durch den Einbau der nach dem Axialflußprinzip arbeitenden Dresch- bzw. Trenneinrichtung in die Erntebergungsvorrichtung 40 wird Raum zur Vergrößerung eines Sammelbehälters im Mähdreschergehäuse zusätzlich geschaffen. Ferner läßt sich bei dieser Anordnung die Reinigungsvorrichtung wesentlich besser im Mähdreschergehäuse plazieren. Ferner läßt sich die Gesamtbauhöhe des Mähdreschers reduzieren, wodurch die Sicht der Bedienungsperson nach hinten über den Sammelbehälter verbessert wird. Durch die Verlagerung des Schwerpunktes nach unten wird die Stabilität und somit die Fahreigenschaften des Mähdreschers gemäß Fig. 1 oder gemäß Fig. 2 wesentlich verbessert. Durch Herausnahme der Dresch- und Trennvorrichtung aus dem Mähdreschergehäuse und durch die Verlegung in die Erntebergungsvorrichtung 40 können Geräusche und Schwingungen, die sich bisher nachteilig auf den Bedienungsstand ausgewirkt haben, wesentlich reduziert werden. Durch Verlegung der Dresch- und Trennvorrichtung in die Erntebergungsvorrichtung 40 wird auch der auf die Reinigungsvorrichtung nachteilig einwirkende Luftstrom, der bei herkömmlichen konventionellen Axialflußmähdreschern auftritt, ausgeschaltet, so daß auch der Wirkungsgrad insgesamt verbessert werden kann.

Ein weiterer Vorteil durch Anordnung der Dresch- und Trennvorrichtung in die Erntebergungsvorrichtung 40 verbessert die Zugänglichkeit zu den einzelnen Arbeitsorganen der Dresch- und Trennvorrichtung, da diese relativ dicht über dem Boden angeordnet sind. Ferner wird der Energieaufwand zum Antrieb der einzelnen Arbeitsorgane reduziert, da lediglich nur Korn- und Kaffgemisch durch das Schrägfördergehäuse bewegt wird. Die Verminderung des Energieaufwandes wird auch dadurch gewährleistet, daß das Erntegut in vorteilhafter Weise tangential von der Einzugsschnecke in die Dreschund Trennvorrichtung gelangt. Gutstau oder Verfilzungen des Erntegutes können dadurch vermindert werden, da nicht das gesamte Stroh durch das Schrägfördergehäuse bewegt werden muß. Sollte einmal ein Gutstau im Bereich der Dresch- und Trennvorrichtung auftreten, so läßt sich dieser Gutstau relativ leicht beseitigen, da die Dresch- und Trennorgane ohne weiteres zugänglich sind.

**Patentansprüche**

1. Mähdrescher (10) mit einer nach dem Axialflußprinzip arbeitenden quer zur Bewegungsrichtung des Mähdreschers sich erstreckenden Dresch- und Trennvorrichtung (50), die in einer Erntebergungsvorrichtung (40) hinter einer das Erntegut zusammenführenden Einzugsschnecke (142) vorgesehen ist und Erntegut über eine unterhalb der aus einer Dresch- und Trenntrommel (180) und einem Dresch- und Trenntrommelgehäuse (162) gebildeten Dresch- und Trennvorrichtung (50) vorgesehene, gegenläufige Schneckenwendeln aufweisende Förderschnecke (188) einem nachgeschalteten in einem Schrägfördergehüuse (48) angeordneten Elevatorförderer (207) zuführt, wobei das Dresch- und Trenngehäuse zumindest teilweise aus einem Durchlaßöffnungen (169) aufweisenden Dresch- und Trennkorb (168) besteht und das Dresch- und Trenntrommelgehäuse (162) im Bereich von Kupplungselementen zur Verbindung der Erntebergungsvorrichtung (40) mit dem Schrägfördergehäuse (48) vorgesehen ist, dadurch gekennzeichnet, daß die Dresch- und Trennvorrichtung (50) zwischen der Einzugsschnecke (142) und dem Elevatorförderer (207) vorgesehen und die Einzugsschnecke zur Beschikkung der Dresch- und Trenntrommel (180) unmittelbar vor der Einlaßöffnung des Dresch- und Trenntrommelgehäuses (162) angeordnet ist.

2. Mähdrescher nach Anspruch 1, dadurch gekennzeichnet, daß der Achsabstand zwischen der Einzugsschnecke (142) und der Dresch- und Trenntrommel (180) gleich oder 1,1 mal der Summe der Radien von Einzugsschnecke und Dresch- und Trenntrommel (180) ist.

3. Mähdrescher nach Anspruch 1, dadurch gekennzeichnet, daß der muldenförmige Boden (154) der Einzugsschnecke (142) über eine ansteigende Rampe mit dem Dresch- und Trenntrommelgehäuse (162) verbunden ist.

4. Mähdrescher nach einem oder mehreren der vorhergehenden Ansprüche, dadurch gekennzeichnet, daß die Einzugsschnecke (142) tangential an das Dresch- und Trenntrommelgehäuse (162) angrenzt und das Dresch- und Trenntrommelgehäuse (162) an mindestens einem Ende der Dresch- und Trenntrommel eine Einlaßöffnung gegenüber der Abgabeseite der Einzugsschnecke (142) aufweist.

5. Mähdrescher nach einem oder mehreren der vorhergehenden Ansprüche, dadurch gekennzeichnet, daß die Länge der Dresch- und Trennvorrichtung (50) größer ist als die Breite des Schrägfördergehäuses (48).

6. Mähdrescher nach einem oder mehreren der vorhergehenden Ansprüche, dadurch gekennzeichnet, daß die Länge der unterhalb der Dresch- und Trennvorrichtung (50) vorgesehenen Förderschnecke (188) zumindest so lang ist wie die seitliche Ausdehnung der Dresch- und Trennvorrichtung (50).

7. Mähdrescher nach den Ansprüchen 1 und 6, dadurch gekennzeichnet, daß die Breite des sich an die Förderschnecke (188) anschließenden Schrägfördergehäuses (48) in etwa der Breite der über das Schrägfördergehäuse beschickbaren Reinigungsvorrichtung (22) entspricht.

8. Mähdrescher nach den Ansprüchen 1 und 7, dadurch gekennzeichnet, daß die Reinigungsvorrichtung (22) aus einem am Ende des Schrägfördergehäuses (48) angeordneten Zuführboden (28) und Sieben (24) gebildet ist.

9. Mähdrescher nach einem oder mehreren der vorhergehenden Ansprüche, dadurch gekennzeichnet, daß die unterhalb der Dreschund Trennvorrichtung (50) vorgesehene und mit Bezug auf die Dresch- und Trennvorrichtung nachgeordnete Förderschnecke (188) in einer Mulde (196) mit einem an der Abgabeseite der Förderschnecke (188) vorgesehenen ansteigenden Bodenteil (156) angeordnet ist, dessen Abgabeende (Kante 206) in etwa in der Höhe der oberen Seite des Elevatorförderers (207) derart endet, daß das Erntegut auf der oberen Seite des Elevatorförderers (207) abgelegt wird.

10. Mähdrescher nach Anspruch 9, dadurch gekennzeichnet, daß die geometrische Verlängerung des ansteigenden Bodenteils (156) der Mulde (196) sich in etwa tangential an der Oberseite des unteren Teils des Elevatorförderers (207) vorbei erstreckt.

11. Mähdrescher nach einem oder mehreren der vorhergehenden Ansprüche, dadurch gekennzeichnet, daß die Einzugsschnecke (142, 244) der Auslaßöffnung (152) gegenüber angeordnete und sich radial erstreckende Förderleisten (150) aufweist, die das Erntegut über eine ansteigende Rampe (Bodenteil 156) der Dresch- und Trenntrommel (180) radial und tangential zuführt, wobei die geometrische Verlängerung der Rampe sich in etwa tangential am Außenumfang der Dresch- und Trenntrommel (150) vorbei erstreckt.

12. Mähdrescher nach Anspruch 11, dadurch gekennzeichnet, daß die Rampe (Bodenteil 156) die Querebene der Dresch- und Trenntrommel (180) unterhalb der Achse an einer Stelle schneidet, die einen Abstand aufweist, der zwischen einem Betrag von 0,5 und 1,0 des Dresch- und Trenntrommelradius liegt.

13. Mähdrescher nach einem oder mehreren der vorhergehenden Ansprüche, dadurch gekennzeichnet, daß das Dresch- und Trenntrommelgehäuse (162) tangential an eine Rückwand eines Gehäuses der Einzugsschnecke (142) angrenzt.

14. Mähdrescher nach einem oder mehreren der vorhergehenden Ansprüche, dadurch gekennzeichnet, daß das Verhältnis des Durchmessers der Dresch- und Trenntrommel (180) zum Durchmesser der Einzugsschnecke (142) nicht größer als 1 ist.

15. Mähdrescher nach einem oder mehreren der vorhergehenden Ansprüche, dadurch gekennzeichnet, daß die Achse der Dresch- und Trenntrommel (180) hinter der Einzugsschnekke (142) liegt.

16. Mähdrescher nach einem oder mehreren der vorhergehenden Ansprüche, dadurch gekennzeichnet, daß die im Dresch- und Trenntrommelgehäuse (162) bzw. im zugehörigen Dresch- und Trennkorb (168) vorgesehenen Öffnungen (169) im Bereich der Rückseite und zumindest teilweise im Bereich der Unterseite der Dresch- und Trenntrommel (180) vorgesehen sind.

17. Mähdrescher nach Anspruch 16, dadurch gekennzeichnet, daß zumindest ein Teil der Öffnungen (169) derart im Dresch- und Trennkorb (168) oder im Dresch- und Trenntrommelgehäuse (162) angeordnet ist, daß ein Teil des Erntegutes direkt dem Elevatorförderer (207) aufgegeben wird.

18. Mähdrescher nach einem oder mehreren der vorhergehenden Ansprüche, dadurch gekennzeichnet, daß im Bereich der Rückseite des Dresch- und Trenntrommelgehäuses (162) schnell lösbare Kupplungselemente vorgesehen sind, zu denen ein am Dresch- und Trenngehäuse vorgesehenes Kupplungsteil gehört, das mit einem am Schrägfördergehäuse (48) vorgesehenen Kupplungsteil in Eingriff bringbar ist.

19. Mähdrescher nach den Ansprüchen 1 und 18, dadurch gekennzeichnet, daß das am Schrägfördergehäuse (48) vorgesehene Kupplungsteil als Kupplungsrahmen (200) ausgebildet ist, dessen plane Kupplungsfläche tangential zur Kupplungsfläche des am Dresch- und Trenntrommelgehäuse (162) vorgesehenen Kupplungsteils verläuft.

20. Mähdrescher nach einem oder mehreren der vorhergehenden Ansprüche, dadurch gekennzeichnét, daß das Gehäuse der Erntebergungsvorrichtung (40) unmittelbar hinter der Rückseite des Dresch- und Trennkorbes (168) eine vertikal verlaufende Rückwand (194) mit einer Durchlaßöffnung (198) aufweist, die gegenüber dem Aufnahmeteil des im Schrägfördergehäuse (48) vorgesehenen Elevatorförderers (207) derart angeordnet ist, daß das Erntegut direkt dem Elevatorförderer aufgegeben wird.

21. Mähdrescher nach einem oder mehreren der vorhergehenden Ansprüche, dadurch gekennzeichnet, daß oberhalb des Schrägfördergehäuses (48) am hinteren, oberen Teil des Dresch- und Trenntrommelgehäuses (162) eine Antriebswelle (216) zum Antrieb der einzelnen Arbeitsorgane der Erntebergungsvorrichtung (40) vorgesehen ist.

22. Mähdrescher nach einem oder mehreren der vorhergehenden Ansprüche, dadurch gekennzeichnet, daß die Erntebergungsvorrichtung (40) mit der Dresch- und Trennvorrichtung (50), der Verbrennungsmotor (70) und die Reinigungsvorrichtung (22) auf einer vorderen auf Laufrädern (66) abstützbaren Rahmeneinheit (60) angeordnet sind, die über eine annähernd vertikal verlaufende Schwenkachse mit einer hinteren ebenfalls auf Laufrädern (84) abstützbaren Rahmeneinheit (62) gelenkig verbunden ist, auf der der Sammelbehälter (82) angeordnet ist.

23. Mähdrescher nach einem oder mehreren der vorhergehenden Ansprüche, dadurch gekennzeichnet, daß der Sammelbehälter (18) auf einem starren, durchgehenden Rahmen mit zwei Laufräderpaaren (12, 14) zwischen der Dresch- und Trennvorrichtung (50) und dem Verbrennungsmotor (20) vorgesehen ist.

24. Mähdrescher nach einem oder mehreren der vorhergehenden Ansprüche, dadurch gekennzeichnet, daß die Dresch- und Trennvorrichtung (50) zwischen der Einzugsschnecke (142) und dem am Schrägfördergehäuse (48) angeordneten Kupplungsrahmen (200) vorgesehen ist, der als Schnellkupplungsrahmen mit Kupplungselementen ausgebildet ist, die in an der Erntebergungsvorrichtung (40) vorgesehene Gegenstücke einführbar bzw. einrastbar sind und die Erntebergungsvorrichtung mit der Dresch- und Trennvorrichtung am Schrägfördergehäuse sichern.

25. Mähdrescher nach einem oder mehreren der vorhergehenden Ansprüche, dadurch gekennzeichnet, daß zwei koaxial zueinander verlaufende Dresch- und Trenntrommeln (312, 314) in je einem Gehäuseabschnitt der Erntebergungsvorrichtung, Pflückvorsatz (304), angeordnet sind, die an ihren gegenüberliegenden Enden über je eine im Gehäuseabschnitt vorgesehene Einlaßöffnung beschickt werden, der sich radial erstreckende, auf dem Mittelabschnitt der Einzugsschnecke (306) vorgesehene Förderleisten zugeordnet sind, wobei jeweils am außenliegenden Ende des Gehäuseabschnitts je eine Auslaßöffnung zur Abgabe von ausgedroschenen Strohteilen vorgesehen ist, während die Auslaßöffnung zum Durchlaß des ausgedroschenen Erntegutes in das Schrägfördergehäuse (328) gegenüber den beiden Einlaßöffnungen der Gehäuseabschnitte vorgesehen ist.

**Claims**

1. A combine harvester (10) comprising a threshing and separating apparatus (50) which operates on the axial flow principle and which extends transversely with respect to the direction of movement of the combine harvester and which is provided in a crop pick-up device (40) behind a draw-in screw (142) for bringing the crop material together, and which feeds crop material by way of a conveyor screw (188) which is provided beneath the threshing and separating apparatus (50) consisting of a threshing and separating drum (180) and a threshing and separating drum housing (162) and which has oppositely directed screw flights, to a downstream-disposed elevator conveyor (207) disposed in an inclined conveyor housing (48), wherein the threshing and separating housing at least partially consists of a threshing and separating concave (168) having through openings (169), and the threshing and separating drum housing (162) is provided in the region of coupling elements for connection of the crop pick-up device (40) to the inclined conveyor housing (48), characterised in that the threshing and separating apparatus (50) is provided between the draw-in screw (142) and the elevator conveyor (207) and the draw-in screw, for the purposes of charging the threshing and separating drum (180), is arranged directly in front of the inlet opening of the threshing and separating drum housing (162).

2. A combine harvester according to claim 1 characterised in that the distance between the axes of the draw-in screw (142) and the threshing and separating drum (180) is equal to or 1.1 times the sum of the radii of the draw-in screw and the threshing and separating drum (180).

3. A combine harvester according to claim 1 characterised in that the trough-like bottom (154) of the draw-in screw (142) is connected by way of a rising ramp means to the threshing and separating drum housing (162).

4. A combine harvester according to one or more of the preceding claims characterised in that the draw-in screw (142) is tangentially adjacent to the threshing and separating drum housing (162) and the threshing and separating drum housing (162) is provided at at least one end of the threshing and separating drum with an inlet opening opposite the discharge side of the draw-in screw (142).

5. A combine harvester according to one or more of the preceding claims characterised in that the length of the threshing and separating apparatus (50) is greater than the width of the inclined conveyor housing (48).

6. A combine harvester according to one or more of the preceding claims characterised in that the length of the conveyor screw (188) provided beneath the threshing and separating apparatus (50) is at least as long as the lateral extent of the threshing and separating apparatus (50).

7. A combine harvester according to claims 1 and 6 characterised in that the width of the inclined conveyor housing (48) which adjoins the conveyor screw (188) approximately corresponds to the width of the cleaning apparatus (22) which can be charged by way of the inclined conveyor housing.

8. A combine harvester according to claims 1 and 7 characterised in that the cleaning apparatus (22) is formed from a feed plate (28) arranged at the end of the inclined conveyor housing (48), and sieves (24).

9. A combine harvester according to one or more of the preceding claims characterised in that the conveyor screw (188) which is provided beneath the threshing and separating apparatus (50) and which is arranged at a downstream position with respect to the threshing and separating apparatus is arranged in a trough (196) with a rising bottom portion (156) which is provided at the discharge side of the conveyor screw (188) and whose discharge end (edge 206) terminates approximately at the level of the top side of the elevator conveyor (207), in such a way that the crop material is deposited on the top side of the elevator conveyor (207).

10. A combine harvester according to claim 9 characterised in that the geometrical extension of the rising bottom portion (156) of the trough (196) extends approximately tangentially past the top side of the lower portion of the elevator conveyor (207).

11. A combine harvester according to one or more of the preceding claims characterised in that the draw-in screw (142, 244) has radially extending conveyor bars (150) which are arranged opposite the outlet opening (152), for radially and tangentially feeding the crop material by way of a rising ramp means (bottom portion 156) to the threshing and separating drum (180), wherein the geometrical extension of the ramp means extends approximately tangentially past the outside periphery of the threshing and separating drum (150).

12. A combine harvester according to claim 11 characterised in that the ramp means (bottom portion (156) intersects the transverse plane of the threshing and separating drum (180) beneath the axis at a location which is at a spacing which is between a value of 0.5 and 1.0 of the threshing and separating drum radius.

13. A combine harvester according to one or more of the preceding claims characterised in that the threshing and separating drum housing (162) tangentially adjoins a rear wall of a housing of the draw-in screw (142).

14. A combine harvester according to one or more of the preceding claims characterised in that the ratio of the diameter of the threshing and separating drum (180) to the diameter of the drawin screw (142) is not greater than 1.

15. A combine harvester according to one or more of the preceding claims characterised in that the axis of the threshing and separating drum (180) lies behind the draw-in screw (142)

16. A combine harvester according to one or more of the preceding claims characterised in that the openings (169) provided in the threshing and separating drum housing (162) and in the associated threshing and separating concave (168) are provided in the region of the rear side and at least partially in the region of the underside of the threshing and separating drum (180).

17. A combine harvester according to claim 16 characterised in that at least some of the openings (169) are arranged in the threshing and separating concave (168) or in the threshing and separating drum housing (162) in such a way that a part of the crop material is delivered directly to the elevator conveyor (207).

18. A combine harvester according to one or more of the preceding claims characterised in that provided in the region of the rear side of the threshing and separating drum housing (162) are quick-release coupling elements to which a coupling portion provided on the threshing and separating housing belongs, which coupling portion can be brought into engagement with a coupling portion provided on the inclined conveyor housing (48).

19. A combine harvester according to claims 1 and 18 characterised in that the coupling portion provided on the inclined conveyor housing (48) is in the form of a coupling frame (200) whose flat coupling surface extends tangentially with respect to the coupling surface of the coupling portion provided on the threshing and separating drum housing (162).

20. A combine harvester according to one or more of the preceding claims characterised in that the housing of the crop pick-up device (40), directly behind the rear side of the threshing and separating concave (168), has a vertically extending rear wall (194) with a through opening (198) which is so arranged relative to the receiving portion of the elevator conveyor (207) provided in the inclined conveyor housing (48), that the crop material is delivered directly to the elevator conveyor.

21. A combine harvester according to one or more of the preceding claims characterised in that a drive shaft (216) for driving the individual working members of the crop pick-up device (40) is provided above the inclined conveyor housing (48) at the rear upper part of the threshing and separating drum housing (162).

22. A combine harvester according to one or more of the preceding claims characterised in that the crop pick-up device (40) with the threshing and separating apparatus (50), the internal combustion engine (70) and the cleaning apparatus (22) are arranged on a front frame unit (60) which can be supported on support wheels (66) and which is pivotally connected by way of an approximately vertically extending pivot axis to a rear frame unit (62) which can also be supported on support wheels (84) and on which the collecting tank (82) is arranged.

23. A combine harvester according to one or more of the preceding claims characterised in that the collecting tank (18) is provided on a rigid continuous frame with two pairs of support wheels (12, 14) between the threshing and separating apparatus (50) and the internal combustion engine (20).

24. A combine harvester according to one or more of the preceding claims characterised in that the threshing and separating apparatus (50) is provided between the draw-in screw (142) and the coupling frame (200) which is arranged on the inclined conveyor housing (48) and which is in the form of a quick-action coupling frame having coupling elements which can be introduced into or engaged into co-operating portions provided on the crop pickup device (40) and secure the crop pick-up device with the threshing and separating apparatus on the inclined conveyor housing.

25. A combine harvester according to one or more of the preceding claims characterised in that two threshing and separating drums (312, 314) which extend in coaxial relationship are each arranged in a respective housing portion of the crop pick-up device, for exemple a front picking unit (304), which are charged at their oppositely disposed ends by way of a respective inlet opening which is provided in the housing portion and with which are associated radially extending conveyor bars provided on the central portion of the draw-in screw (306), wherein a respective outlet opening for discharge of threshed-out straw pieces is provided at the outward ends of the respective housing portions, while the outlet opening for passing the threshed-out crop material into the inclined conveyor housing (328) is provided opposite the two inlet openings of the housing portions.

**Revendications**

1.- Moissonneuse-batteuse (10) comportant un ensemble de battage et de séparation (50) travaillant selon le principe à acheminement axial des produits de récolte et s'étendant transversalement à la direction de marche ou de progression de la moissonneuse-batteuse, cet ensemble étant prévu dans un dispositif de récolte proprement dit (40) en arrière d'une vis d'amenée (142) assurant la convergence des produits de récolte et amenant les produits de récolte, par l'intermédaire d'une vis transporteuse (188) prévue au-dessous de l'ensemble de battage et de séparation formé par un rotor de battage et de séparation (180) et par un carter de rotor de battage et de séparation (162) et présentant des filets de vis opposés, à un transporteur-élévateur (207) disposé en aval dans un carter de convoyeur incliné (45), le carter de battage et de séparation étant constitué au moins en partie par un contre-batteur séparateur (168') présentant des orifices de passage (169), le carter (162) du rotor de battage et de séparation étant prévu au voisinage d'éléments d'accouplement permettant de relier le dispositif de récolte proprement dit (40) au carter de transporteur-élévateur (48), caractérisé en ce que l'ensemble de battage et de séparation (50) est prévu entre la vis d'amenée (142) et le transporteur-élévateur (207), et en ce que la vis d'amenée servant à l'alimentation du rotor de battage et de séparation (180) est disposée directement devant l'orifice d'entrée du carter (162) du rotor de battage et de séparation.

2.- Moissonneuse-batteuse suivant la revendication 1, caractérisée en ce que l'écartement entre les axes de la vis d'amenée (142) et du rotor de battage et de séparation (180) correspond à 1,1 fois la sonme des rayons de la vis d'amenée et du rotor (180) de battage et de séparation.

3.- Moissonneuse-batteuse suivant la revendication 1, caractérisée en ce que le fond en forme de cuvette ou de gouttière (154) de la vis d'amenée (142) est relié par une rampe ascendante au carter (162) du rotor de battage et de séparation.

4.- Moissonneuse-batteuse suivant une ou plusieurs des revendications précédentes, caractérisée en ce que la vis d'amenée ou d'alimentation (142) se raccorde tangentiellement au carter (162) du rotor de battage et de séparation et en ce que ce carter (162) du rotor de battage et de séparation présente, à une extrémité au moins du rotor de battage et de séparation, un orifice d'entrée situé en face du côté sortie de la vis d'amenée ou d'alimentation (142).

5.- Moissonneuse-batteuse suivant une ou plusieurs des revendications précédentes, caractérisée en ce que la longueur de l'ensemble de battage et de séparation (50) est supérieure à la largeur du carter (48) du transporteur-élévateur.

6.- Moissonneuse-batteuse suivant une ou plusieurs des revendications précédentes, caractérisée en ce que la longueur de la vis transporteuse (188) prévue au-dessous de l'ensemble de battage et de séparation (50) est au moins égale à l'étendue transversale de l'ensemble de battage et de séparation (50).

7.- Moissonneuse-batteuse suivant les revendications 1 et 6, caractérisée en ce que la largeur du carter (48) du transporteur-élévateur se raccordant à la vis transporteuse (188) correspond sensiblement à la largeur de l'ensemble de nettoyage (22) pouvant étre alimenté par l'intermédiaire du carter de transporteur-élévateur.

8.- Moissonneuse-batteuse suivant les revendications 1 et 7, caractérisée en ce que l'ensemble de nettoyage (22) est formé par une table d'amenée (28) disposée à une extrémité du carter (48) du transporteur-élévateur et par des cribles (24).

9.- Moissonneuse-batteuse suivant une ou plusieurs des revendications précédentes, caractérisée en ce que la vis transporteuse (188) prévue au-dessous de l'ensemble de battage et de séparation (50) et disposée en aval par rapport à cet ensemble de battage et de séparation est montée dans une cuvette ou gouttière (196) munie d'une partie formant fond ascendante (156) prévue du côté sortie de la vis transporteuse (188), l'extrémité de sortie ou de déchargement (bord 206) de cette partie formant fond se terminant sensiblement à la hauteur du côté supérieur du transporteur-élévateur (207), de telle sorte que les produits de récolte soient déversés sur ce côté supérieur du transporteur-élévateur (207).

10.- Moissonneuse-batteuse suivant la revendication 9, caractérisée en ce que le prolongement géométrique de la partie formant fond ascendante (156) de la cuvette ou gouttière (196) s'étend en principe tangentiellement au côté supérieur de la partie inférieure du transporteur-élévateur (207).

11.- Moissonneuse-batteuse suivant une ou plusieurs des revendications précédentes, caractérisée en ce que la vis d'amenée (142, 144) comporte des barrettes de transport (150) disposées en face de l'orifice de sortie (152) et s'étendant radialement, ces barrettes amenant radialement et tangentiellement les produits de récolte au rotor de battage et de séparation (180) par l'intermédiaire d'une rampe ascendante (partie formant fond 156), le prolongement géométrique de la rampe s'étendant en principe tangentiellement à la périphérie extérieure du rotor de battage et de séparation (180).

12.- Moissonneuse-batteuse suivant la revendication 11, caractérisée en ce que la rampe (partie formant fond 156) coupe le plan transversal du rotor de battage et de séparation (180) au-dessous de l'axe, en un point qui est écarté de cet axe d'une distance comprise entre 0,5 et 1,0 fois le rayon du rotor de battage et de séparation.

13.- Moissonneuse-batteuse suivant une ou plusieurs des revendications précédentes, caractérisée en ce que le carter (162) du rotor de battage et de séparation jouxte tangentiellement une paroi arrière d'un carter de la vis d'amenée (142).

14.- Moissonneuse-batteuse suivant une ou plusieurs des revendications précédentes, caractérisée en ce que le rapport entre le diamètre du rotor de battage et de séparation (180) et le diamètre de la vis d'amenée (142) n'est pas supérieur à 1.

15.- Moissonneuse-batteuse suivant une ou plusieurs des revendications précédentes, caractérisée en ce que l'axe du rotor (180) de battage et de séparation se trouve en arrière de la vis d'amenée (142).

16.- Moissonneuse-batteuse suivant une ou plusieurs des revendications précédentes, caractérisée en ce que les orifices (169) prévus dans le carter (162) du rotor de battage et de séparation ou dans le contre-batteur séparateur conjugué (168) sont disposés vers le côté arrière et au moins partiellement dans la zone inférieure du rotor de battage et de séparation (180).

17.- Moissonneuse-batteuse suivant la revendication 16, caractérisée en ce qu'une partie au moins des orifices (169) sont disposés dans le contre-batteur séparateur (168) ou bien dans le carter (162) du rotor de battage et de séparation de telle sorte qu'une partie des produits de récolte soit amenée directement au transporteur-élévateur (207).

18.-Moissonneuse-batteuse suivant une ou plusieurs des revendications précédentes, caractérisée en ce qu'il est prévu, dans la zone correspondant au côté arrière du carter (162) du rotor de battage et de séparation, des éléments d'accouplement rapide dont fait partie un organe d'accouplement prévu sur le carter du rotor de battage et de séparation, qui peut être amené en prise avec un organe d'accouplement prévu sur le carter de transporteur-élévateur (48).

19.- Moissonneuse-batteuse suivant les revendications 1 et 18, caractérisée en ce que l'organe d'accouplement prévu sur le carter (48) de transporteur-élévateur se présente sous la forme d'un cadre ou bâti d'accouplement (200) dont la surface d'accouplement plane s'étend tangentiellement à la surface d'accouplement de l'organe d'accouplement prévu sur le carter (162) du rotor de battage et de séparation.

20. Moissonneuse-batteuse suivant une ou plusieurs des revendications précédentes, caractérisée en ce que le carter du dispositif de récolte (40) comporte, directement derrière le côté arrière du contre-batteur séparateur (168), une paroi ou cloison arrière (194) disposée verticalement, munie d'un orifice de passage (198) qui est disposé, par rapport à la partie de réception du transporteur-élévateur (207) prévu dans le carter de convoyeur incliné (48), de façon telle que les produits de récolte soient amenés directement au transporteur-élévateur.

21.- Moissonneuse-batteuse suivant une ou plusieurs des revendications précédentes, caractérisée en ce qu'il est prévu, au-dessus du carter de convoyeur incliné (48), dans la partie supérieure arrière du carter (162) du rotor de battage et de séparation, un arbre d'entraînement (216) servant à l'entraînement des organes actifs individuels du dispositif de récolte (40).

22.- Moissonneuse-batteuse suivant une ou plusieurs des revendications précédentes, caractérisée en ce que le dispositif de récolte (40), avec l'ensemble de battage et de séparation (50), le moteur à combustion interne (70) et l'ensemble de nettoyage (22), sont disposés sur un châssis avant (60) pouvant prendre appui sur des roues porteuses (66), ce châssis étant relié à articulation, par un axe de pivotement ou d'articulation s'étendant en principe verticalement, à un châssis arrière (62) pouvant également prendre appui sur des roues porteuses (84) et sur lequel la trémie formant réceptacle collecteur (82) est montée.

23.- Moissonneuse-batteuse suivant une ou plusieurs des revendications précédentes, caractérisée en ce que la trémie (18) formant réceptacle collecteur est prévue sur un châssis rigide continu comportant deux paires de roues porteuses (12, 14), entre l'ensemble de battage et de séparation (50) et le moteur à combustion interne (20).

24.- Moissonneuse-batteuse suivant une ou plusieurs des revendications précédentes, caractérisée en ce que l'ensemble de battage et de séparation (50) est prévu entre la vis d'amenée (142) et le cadre ou bâti d'accouplement (200) dispose sur le carter de transporteur-élévateur (48), ce cadre se présentant sous la forme d'un cadre d'accouplement rapide et étant muni d'éléments d'accouplement qui peuvent être engagés dans ou enclenchés avec des éléments antagonistes prévus sur le dispositif de récolte (40) et qui solidarisent ce dispositif de récolte avec l'ensemble de battage et de séparation sur le carter de transporteur-élévateur.

25.- Moissonneuse-batteuse suivant une ou plusieurs des revendications précédentes, caractérisée en ce que deux rotors de battage et de séparation (312, 314) disposés coaxialement l'un à l'autre sont prévus chaque fois dans un tronçon de carter du dispositif de récolte, par exemple une tête de récolte (304) ces rotors étant alimentés à leurs extrémités en regard chaque fois par un orifice d'entrée prévu dans le tronçon de carter et auquel sont conjuguées des barrettes transporteuses s'étendant radialement, prévues dans le tronçon médian de la vis d'amenée (306), et en ce qu'il est prévu chaque fois, à l'extrémité située à l'extérieur du tronçon de carter, un orifice de sortie pour le déchargement des fractions battues formant la paille, tandis que l'orifice de sortie pour le passage des produits de récolte battus séparés de la paille dans le carter de transporteur-élévateur (328) est prévu en face des deux orifices d'entrée des tronçons de carter.

FIG. 1

FIG. 2

FIG. 3

FIG. 11

FIG. 4

FIG. 5

# FIG. 6

FIG. 8

FIG. 9

FIG. 7

FIG. 10

13